# FASCICULE DE BREVET EUROPEEN

(11) **EP 0 738 470 B1**
(45) Date de publication et mention de la délivrance du brevet: **08.03.2000**
(21) Numéro de dépôt: 96400775.1
(22) Date de dépôt: 10.04.1996
(51) Int. Cl.: A21B 5/03

(54) **Dispositif pour former en série des objets plats de formé et d'épaisseur réglables, par dépôt sur un support d'une substance relativement fluide**
Gerät zum Formen flacher Gegenstände mit einstellbarer Ausdehnung durch Ablagerung flüssiger Substanz auf einem Träger
Device forming flat objects of adjustable thickness depositing a fluid substance on a support

(30) Priorité: 20.04.1995 FR 9504862
(43) Date de publication de la demande: 23.10.1996
(73) Titulaire: INSTITUT FRANCAIS DU PETROLE, 92500 Rueil Malmaison (FR); Le Dall, Jean-Claude, 92500 Rueil-Malmaison (FR)
(72) Inventeur: Le Dall, Jean-CLaude, 92500 Rueil-Malmaison (FR); Madec, Marcel, 92150 Suresnes (FR)

(56) Documents cités:
- FR-A- 1 578 102
- FR-A- 2 137 052
- FR-A- 2 173 433

## Description

La présente invention concerne un dispositif pour réaliser en série sur un support quelconque des disques d'épaisseur réglable, formés à partir de divers substances de consistance relativement fluide : crêmeuse, pâteuse, pulvérulente, etc.

Le dispositif peut trouver des applications dans de nombreux domaines, notamment dans des cycles de fabrication de disques de filtration ou de disques en matériaux réfractaires tels que des céramiques, ou encore dans les industries électroniques pour étaler sur des circuits, des vernis photo-sensibles ou bien de la crême à braser préalablement à des opérations de soudure.

Le dispositif selon l'invention trouve des applications intéressantes dans les industries agro-alimentaires notamment pour la fabrication automatisée de crêpes ou galettes etc. Dans ce domaine d'application, différents exemples de réalisation de dispositifs pour confectionner des crêpes ou galettes sont décrits notamment dans les brevets FR 2. 590. 388 ou les brevets US 4 583 451, 4 733 608 ou 5 077 072.

Le dispositif selon l'invention permet de former en série des objets plats et notamment des galettes minces de forme particulière, sur une paroi d'application quelconque, à partir d'une substance de consistance suffisamment fluide, comportant un tambour de distribution monté rotatif sur un arbre creux, adapté à être placé au contact de la paroi d'application, la paroi de ce tambour de distribution comportant au moins une ouverture dont la forme est choisie en rapport avec la forme à donner à chaque objet plat, des moyens reliés à l'arbre pour introduire de cette substance à l'intérieur du tambour. On connait ce type de dispositif par le document FR-A-1578102. Le dispositif comporte un élément de répartition plan pour canaliser et étaler de la substance sur la surface d'application au travers de ladite ouverture, cet élément de répartition qui communique avec l'intérieur de l'arbre, étant disposé radialement entre l'arbre et la face intérieure du tambour et des moyens de guidage pour maintenir au contact de celle-ci l'élément de répartition.

Suivant un mode de réalisation, les moyens pour introduire la substance comprennent un récipient contenant la substance, qui est relié à l'intérieur de l'arbre lequel comporte au moins une ouverture radiale faisant communiquer l'intérieur de l'arbre avec l'intérieur du tambour de distribution.

Le dispositif comporte avantageusement un circuit de pompage incluant ledit récipient, adapté à faire circuler la substance en continu le long de l'élément de répartition.

L'élément de répartition est par exemple associé à l'arbre et comporte par exemple deux plaques disposées de part et d'autre de ladite ouverture, délimitant entre elles, au voisinage dans leur zone de contact avec la paroi intérieure du tambour, une rainure relativement étroite, et il est guidé par des moyens de guidage associés à l'arbre qui sont adaptés à plaquer la rainure contre la paroi intérieure du tambour.

Ces moyens de guidage comportent par exemple une ou plusieurs douilles de section adaptée à celle de l'ouverture axiale dans l'arbre.

Pour faciliter son nettoyage, l'élément de répartition comporte de préférence des logements pour les moyens de guidage permettant de les découpler de l'arbre.

Suivant un mode de réalisation, le dispositif comporte par exemple deux bras de support solidaires d'un axe de pivotement, permettant de faire basculer le tambour entre une position de travail au contact de la paroi d'application et une position de dégagement et des moyens moteurs pour déplacer sans glissement le tambour de distribution relativement à la paroi d'application.

Suivant un premier mode de mise en oeuvre, la paroi d'application est la surface d'une table allongée, l'axe de pivotement des deux bras de support est solidaire d'un chariot déplaçable relativement à la table, les moyens moteurs comportent un motoréducteur coopérant avec des éléments d'entraînement synchronisés du tambour en rotation et du chariot en translation, tels par exemple qu'une courroie d'entraînement du tambour et une crémaillère pour translater le chariot par rapport à la table.

Suivant un deuxième mode de mise en oeuvre, la paroi d'application est la surface d'un cylindre sur lequel repose le tambour de distribution en position de travail, et les moyens moteurs comportent par exemple et des éléments pour la mise en rotation synchronisée en sens inverse l'un de l'autre du cylindre et du tambour comprenant par exemple un moto-réducteur coopérant avec une courroie d'entraînement du tambour.

Suivant un troisième mode de mise en oeuvre, la paroi d'application est la surface d'un tapis transporteur sans fin sur lequel repose le tambour de distribution en position de travail, les moyens moteurs comportant des éléments d'entraînement synchronisés du tambour en rotation et du tapis transporteur en translation.

Le dispositif peut comporter en outre des moyens de cuisson des objets plats après leur dépôt sur la paroi d'application : plaques de cuisson positionnées en fonction de la répartition des dépôts de substance par le tambour de distribution, ou tunnel de cuisson à rayonnement infra-rouge, associé au tapis transporteur, lequel est de préférence adapté à être traversé par les rayons infra-rouges.

Le dispositif peut encore comporter en outre avantageusement des moyens de lavage et des moyens de déplacement du tambour de distribution entre une position de travail en contact de la la paroi d'application et une position de repos au voisinage des moyens de lavage.

Suivant un mode de mise en oeuvre, les moyens pour introduire de la substance à l'intérieur du tambour de distribution comportent des moyens de thermo-régulation qui peuvent être associés au récipient de substance pour la refroidir, la réfrigérer ou la préchauffer selon les cas, et/ou installés encore sur un circuit fermé entre le récipient et la tambour de distribution par exemple pour lui imposer une température de consigne.

Suivant un autre mode de réalisation, le dispositif peut comporter des moyens pour déplacer angulairement la rampe par rapport à la paroi d'application.

Le dispositf présente de nombreux avantages. Sa simplicité de conception se conjugue avec une grande facilité d'utilisation et d'entretien, et il est relativement peu onéreux; la forme et l'épaisseur des objets plats : disques, galettes etc., produits sont bien régulières. Selon les modes de mise en oeuvre du tambour de répartition, on peut faire varier dans de notables proportions la quantité d'objets plats qu'il est possible de fabriquer, si bien que le dispositif peut convenir aussi bien pour des applications artisanales qu'industrielles.

D'autres caractéristiques et avantages du dispositif selon l'invention, apparaîtront à la lecture de la description ci-après de modes de réalisation décrits à titre d'exemples non limitatifs, en se référant aux dessins annexés où :
- la Fig. 1 montre le distributeur de matière vu de face, en coupe longitudinale;
- la Fig.2 montre le distributeur de matière en coupe transversale;
- les Fig.3 et 4 montrent un premier mode de réalisation du dispositif avec un distributeur de matière adapté à déposer des objets plats tels que des galettes, à intervalles réguliers sur un support plat sur lequel il roule;
- la Fig. 5 montre un deuxième mode de réalisation du dispositif avec un distributeur de matière adapté à déposer des objets plats sur un support cylindrique sur lequel il roule;
- la Fig.6 montre un troisième mode de réalisation du dispositif avec un distributeur de matière adapté à déposer des objets plats à intervalles réguliers sur un tapis transporteur passant dans un tunnel de cuisson; et
- la Fig.7 montre un mode de réalisation d'un système d'alimentation continu du distributeur en substance à déposer.

Les disques ou galettes mentionnés dans la suite de la description sont des exemples non limitatifs d'objets plats qu'il est possible de fabriquer avec le dispositif selon l'invention.

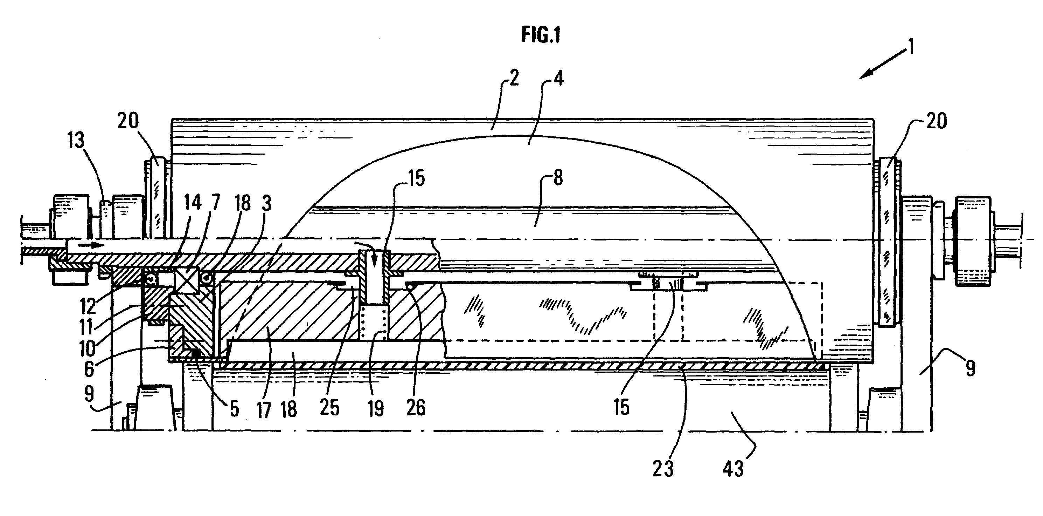

Le distributeur schématisé à la Fig. 1 convient pour la fabrication de tout objet plat comporte tout d'abord un tambour extérieur ou rotor 1 comprenant un tube 2 terminé à ses deux extrémités opposées par deux flasques 3. L'épaisseur de la paroi extérieure du tube 2 est choisie en fonction de l'épaisseur des disques ou galettes à déposer. Dans la paroi de ce tube 2, est pratiquée une ouverture 4 dont la forme est adaptée à celle des disques ou galettes à déposer, par exemple une ouverture circulaire. Des garnitures toriques 5, en élastomère par exemple, qui sont déformées par des fouloirs 6 vissés dans les deux flasques 3, rendent ceux-ci solidaires du tube 2.

Le tambour 1 est monté rotatif par l'intermédiaire de deux roulements à billes 7, sur un arbre creux fixe 8 porté par deux bras 9. Les cages extérieures de ces deux roulements à billes 7 sont solidarisées aux flasques 3 par des couvercles 10 fixés par action de vis 11, avec des joints à lèvres 12 pour assurer l'étanchéité. Les cages intérieures de ces mêmes roulements à billes 7 sont rendues solidaires de l'arbre 8 par l'action d'écrous 13 agissant axialement au travers des bras de support 9, sur des entretoises 14.

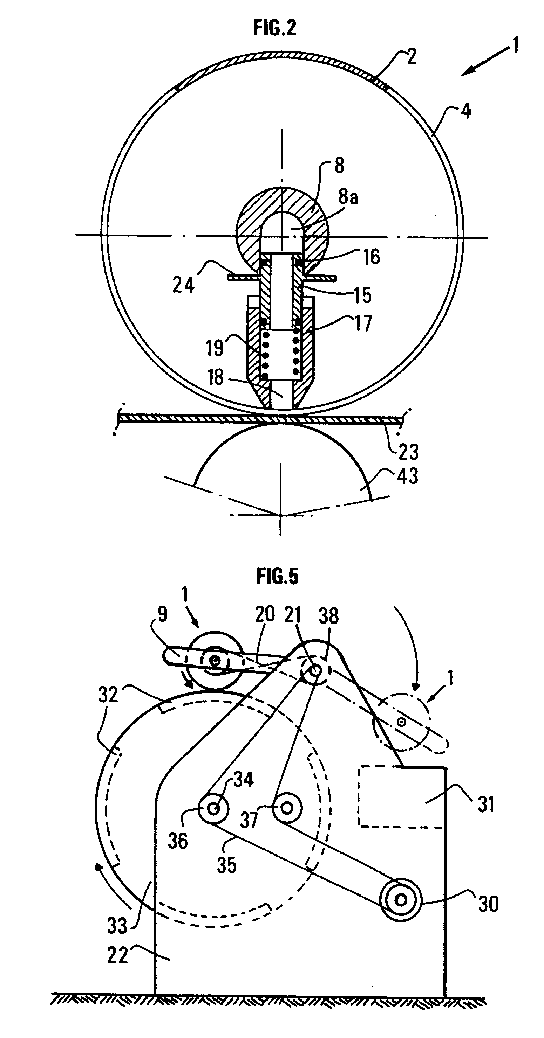

Deux guides tubulaires 15 pourvus extérieurement de joints d'étanchéité 16, sont disposés dans des ouvertures ménagées radialement dans l'arbre 8. Sur ces deux guides 15, coulisse librement une rampe de répartition 17 constituée (Fig.2) de deux plaques parallèles solidaires l'une de l'autre réalisées avantageusement dans une matière plastique antifriction résistant à la température. Les deux plaques de la rampe 17 délimitent une rainure 18 qui est pressée contre la face intérieure du tambour 1 par l'action de ressorts 19 en appui contre une face terminale des deux guides 15.

Les guides tubulaires 15 font communiquer l'intérieur de l'arbre 8 avec la face intérieure du tambour 1 entre les deux plaques de la rampe 17.

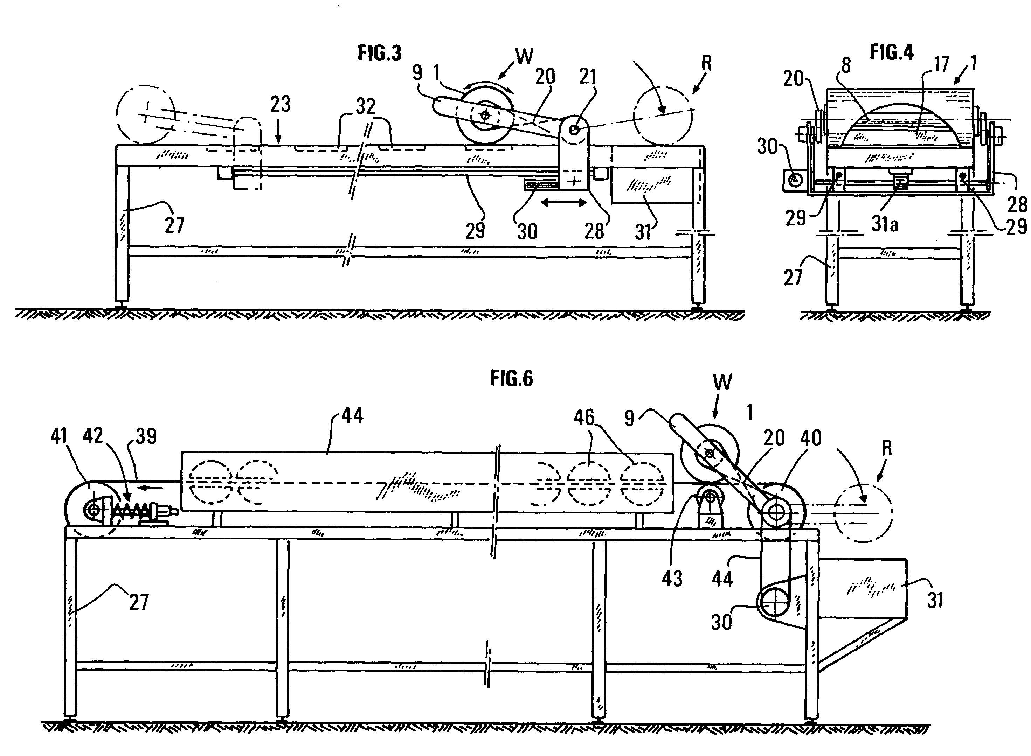

Le tambour 1 est entraîné en rotation par l'intermédiaire d'une courroie d'entraînement crantée 20 passant autour du couvercle 10. Les bras de support 9 peuvent pivoter autour d'un axe 21 solidaire d'un bâti rigide 22 (Fig.3-5) entre une position de travail W où le tambour 1 est en appui sur une paroi 23 pour y déposer des disques ou crêpes, et une position de repos R, cette paroi, selon les modes de réalisation et/ou les applications, pouvant être plane (Fig.2, 3) ou bien encore cylindrique (Fig.5).

La substance à déposer est introduite par l'intérieur de l'arbre 8. Elle s'écoule au travers des guides tubulaires 15 et de la rainure 18 dans la rampe de répartition 17 et se répand sur la paroi d'application 23 par l'ouverture 4 dans le tambour 1. La circulation de la substance peut s'effectuer par simple gravité ou bien au moyen par exemple d'une pompe (non représentée). Etalé et réparti par les lèvres de la rainure 18 au sortir de la rampe 17, le dépôt de substance sur la paroi 23 prend la forme de l'ouverture 4 et son épaisseur est en relation directe avec l'épaisseur de la paroi du tambour 1. Le débit d'injection de la substance est régulier pour éviter toute stagnation.

Les substances à déposer pouvant être sensibles à des pollutions diverses, et c'est notamment le cas des produits alimentaires, il importe que le tambour de répartition puisse être aisément nettoyé. A cette fin, chaque guide comporte une collerette profilée 24 (Fig.2) qui est normalement plaquée contre l'arbre 8 par les ressorts 19. La rampe de répartition est pourvue de logements 25 pour chacune des collerettes 24, suffisamment profonds pour permettre le dégagement complet des guides 15 hors de l'arbre 8. Des ergots 26 sont fixés à la rampe 8 sous lesquels chacune des collerettes profilées 24 peut être verrouillée par rotation des guides 15 autour de leur axe. Une fois la rampe de répartition 17 dégagée de l'arbre, on peut l'extraire hors du tambour 1 par son ouverture 4.

Suivant le mode de réalisation des Fig.3, 4, le bâti 22 comporte une table allongée 27 dont la surface constitue la paroi d'application 23. Les bras 9 associés au tambour 1, sont fixés à un chariot 28 pouvant glisser le long de la table le long de rails cylindriques 29. Un motoréducteur 30 (Fig.4) entraîne une roue dentée associé au chariot 28 qui s'engrène sur une crémaillère 31a fixée à la table 27 parallèlement à son axe longitudinal. Le même motoréducteur 30 entraîne le tambour de distribution 1 par l'intermédiaire de la courroie crantée 20. Un bac de lavage 31 est de préférence installé à une extrémité de la table 27, au-dessus duquel le tambour de distribution en position de repos R peut être amené.

Le tambour étant basculé en position de travail W à un bout de la table 27, on actionne le motoréducteur 30 de façon à obtenir une translation du chariot 28 combiné avec une rotation du tambour de distribution 1. La substance injectée dans le même temps par l'arbre 8 (Fig.1), est déposée sur la table 27 avec une répartition qui dépend de la forme de l'ouverture 4 si elle est unique ou de la distribution des ouvertures s'il y en a plusieurs. Ensuite, le chariot 28 est ramené à sa position initiale pour un nouveau cycle.

Pour certaines applications où le processus de fabrication des disques nécessite une cuisson, notamment pour la confection de crêpes, on dispose plusieurs plaques de cuisson 32 le long de la table à des intervalles fixés dépendant du diamètre du tambour de distribution et on positionne celui-ci de façon que les dépôts de substance se fassent à l'endroit des plaques de cuisson 32.

Suivant le mode de fabrication de la Fig.5, la formation de disques ou galettes est rendue continue en utilisant une paroi de dépôt de forme cylindrique. Le tambour de distribution 1 en position de travail W, roule sur un cylindre 33 disposé horizontalement, dont l'axe 34 est supporté par le bâti 22. Les bras de support sont reliés à l'axe 21 qui peut pivoter par rapport au bâti 22 entre sa position de travail W et une position de repos R où le tambour de distribution 1 se retrouve au-dessus du bac de nettoyage 31 également. Le motoréducteur 30 fait tourner en sens inverse l'un de l'autre le cylindre 33 et le tambour de distribution 1. L'entraînement est réalisé au moyen d'une courroie 35 qui entraine une poulie 36 solidaire de l'axe 34 du cylindre 33 par l'intermédiaire d'une poulie de renvoi 37 et une poulie 38 solidaire de l'axe 21 de pivotement des bras, et de la courroie crantée 20 qui entraîne le tambour 1.

Pour les applications où le processus de fabrication des disques ou galettes nécessite également une cuisson, on dispose une ou plusieurs plaques de cuisson 32 sur le pourtour du cylindre 33 avec des espacements choisis en fonction du diamètre du tambour et de son ou ses ouverture(s) 4, de façon que les dépôts de substance se fassent à leurs emplacements. Des moyens connus (non représentés) tels qu'un collecteur électrique à balais, permettent la transmission aux plaques de cuisson d'énergie électrique. Ce mode de réalisation convient pour un processus de fabrication continu.

Un ou plusieurs moyens de cuisson à rayons infra-rouges (non représentés) peuvent être disposés également au-dessus de la table 27 ou autour du cylindre 33 du dispositif selon les modes de réalisation des Fig.3-5, de façon à cuire les disques déposés des deux côtés, si l'application l'exige.

La production de disques ou galettes sur une plus grande échelle peut être obtenue par la mise en oeuvre du mode de réalisation de la Fig.6 Le tambour de distribution roule sur un tapis transporteur sans fin 39 tendu entre deux rouleaux 40, 41 montés rotatifs aux extrémités opposées de la table 27. La tension du tapis peut être ajustée par un élément de tension à ressort 42. Le tapis passe entre le tambour 1 et un rouleau fou 43 supporté par le bâti 22. Le motoréducteur 30 entraîne en rotation un des rouleaux 40 par une courroie 44, et celui-ci communique son mouvement au tambour 1 par la courroie crantée 20.

Un dispositif d'enlèvement (non représenté) peut être placé à l'extrémité du tapis, du côté du rouleau 41 pour décoller et enlever les disques ou galettes ainsi formés.

Pour les applications où le processus de fabrication des disques ou galettes nécessite aussi une cuisson, on fait passer le tapis transporteur 40 dans un tunnel de cuisson 45 équipé de rampes de cuisson à infra-rouges 46. Le tapis est dans ce cas réalisé de préférence dans un matériau transparent aux ondes infra-rouges tel qu'un tissu de verre enduit de matière plastique fluorée.

La vitesse d'avancement du tapis transporteur 40 et la puissance de chauffe sont réglées de façon que les disques ou galettes atteignent un point de cuisson suffisant à l'extrémité du tunnel.

On a décrit des modes de réalisation où la substance peut circuler le long de l'arbre creux 8 et s'écouler par les guides tubulaires 15 vers la zone d'étalement. On ne sortirait pas du cadre de l'invention en remplaçant ce mode de distribution par le suivant.

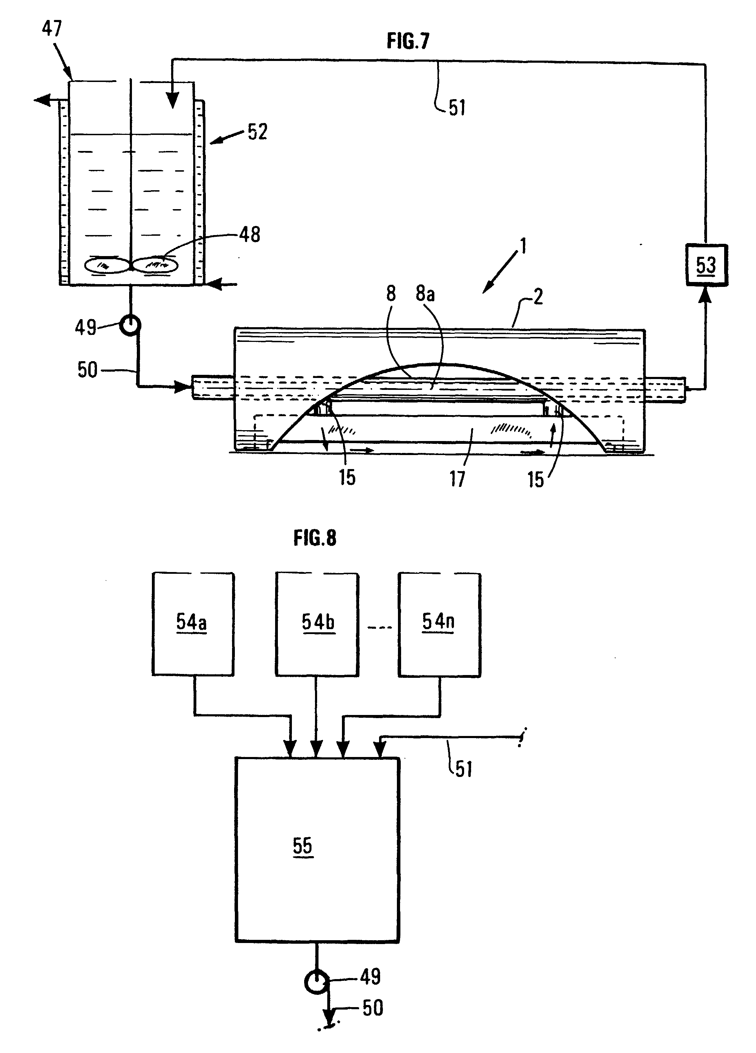

Suivant ce mode, le dispositif comporte un système de distribution schématisé à la Fig.7, qui est adapté à établir une circulation continue de la pâte au niveau de la zone de contact entre la rampe de répartition 17 et la face intérieure du tambour 1. Il comporte un réservoir 47 pour la pâte ou substance, des moyens 48 de brassage de la substance à l'intérieur du réservoir 47 et un circuit fermé de pompage relié au tambour de distribution 1. Ce circuit comporte une pompe 49, de type péristaltique par exemple, intercalée sur un tube 50 reliant la pompe à une première extrémité du conduit axial 8a.

La substance introduite est déviée par un premier des deux guides tubulaires 15 vers la rampe de répartition 17. Elle circule le long de la zone de contact entre la base de la rampe 17 et soit la plaque de dépôt accessible au travers de l'ouverture 4 du tube 2 aux emplacements prévus de dépôt et de cuisson) soit la paroi intérieure du tube 2 entre les emplacements prévus. La substance non déposée y compris celle qui est en excès aux emplacements prévus de dépôt, est reprise au niveau du deuxième guide tubulaire 15 et retourne au canal axial 8a de l'arbre, auquel est connecté un deuxième tube 51 qui la ramène au réservoir 47.

Cette circulation continue de la substance évite l'encrassement de la zone de dépôt par la substance en excès. La substance étant distribuée bien régulièrement de ce fait, on obtient une production de disques ou galettes de dimensions et qualité bien homogènes.

Ce détournement de circulation de la substance vers la zone de dépôt peut être obtenu par un cloisonnement de l'arbre creux 8 aux endroits des embranchements vers les guides tubulaires 15, soit en utilisant un arbre plein dans l'axe duquel sont percés des portions de canaux de longueur suffisante pour établir la communication avec les guides 15.

Le dispositif peut comporter un moyen 52 de thermorégulation du réservoir 47, adapté à l'application. Il peut s'agir d'un élément de refroidissement ou de réfrigération quand c'est utile à la bonne conservation de la substance notamment dans le domaine alimentaire. soit qu'il s'agisse de ra refroidir avant son recyclage en cours d'opération, soit entre deux périodes d'utilisation du dispositif pour éviter toute opération de transvasement.

Il peut s'agir encore d'un dispositif de préchauffage de la substance pour l'amener à une température déterminée, nécessaire pour l'amener à un certain degré de fluidité ou de consistance.

Le dispositif peut également comporter un échangeur de chaleur 53 installé sur le circuit au niveau du tube 51 par exemple, pour ramener ou porter la substance criculante à une température de consigne.

On a décrit différents modes de réalisation où la rampe de répartition 17 est orientée perpendiculairement à la paroi d'étalement de la substance (cf. Fig.2). Cependant, on ne sortirait pas du cadre de l'invention en rendant l'arbre 8 rotatif de façon à décaler angulairement la rampe de répartition (l'incliner latéralement) avec pour effet de faire varier l'écart entre les lèvres de la rainure 18, et par conséquent une variation possible de l'épaisseur des disques déposés sur la d'application 23.

On a décrit des modes de réalisation où le tambour de distribution comporte une seule ouverture 4 et deux guides creux 15 d'injection de la substance à répandre. On ne sortirait pas toutefois du cadre de la présente invention en ménageant plusieurs ouvertures avec un espacement périphérique et latéral convenant pour une autre application, ni en changeant le nombre et la forme des ouvertures qui font communiquer le canal à l'intérieur de l'arbre 8 avec l'intérieur du tambour de distribution.

## Revendications

1. Dispositif pour former en série des objets plats et notamment des galettes minces de forme particulière, sur une paroi d'application (23) quelconque, à partir d'une substance de consistance suffisamment fluide, comportant un tambour de distribution (1) monté rotatif sur un arbre creux (8), adapté à être placé au contact de la paroi d'application (23), la paroi de ce tambour de distribution (1) comportant au moins une ouverture (4) dont la forme est choisie en rapport avec la forme à donner à chaque objet plat, des moyens reliés à l'arbre pour introduire de cette substance à l'intérieur du tambour, caractérisé en ce qu'il comporte un élément de répartition plan (17) pour canaliser et étaler de la substance sur la surface d'application au travers de ladite ouverture, cet élément de répartition qui communique avec l'intérieur de l'arbre (8), étant disposé radialement entre l'arbre (8) et la face intérieure du tambour et des moyens de guidage (15,19) pour maintenir au contact de celle-ci l'élément de répartition (17).

2. Dispositif selon la revendication 1, caractérisé en ce que les moyens pour introduire la substance comprend un récipient (47) contenant la substance, qui est relié à l'intérieur de l'arbre (8) lequel comporte au moins un orifice radial faisant communiquer l'intérieur de l'arbre avec l'intérieur du tambour de distribution (1).

3. Dispositif selon la revendication précédente, caractérisé en ce qu'il comporte un circuit de pompage (47-52) incluant ledit récipient (47), adapté à faire circuler la substance en continu le long de l'élément de répartition (17).

4. Dispositif selon l'une des revendications précédentes, caractérisé en ce que l'élément de répartition (17) est associé à l'arbre (8) et comporte deux plaques disposées de part et d'autre de ladite ouverture, délimitant entre elles, au voisinage dans leur zone de contact avec la paroi intérieure du tambour, une rainure (18) relativement étroite.

5. Dispositif selon la revendication précédente, caractérisé en ce qu'il comporte des moyens (15, 19) de guidage de l'élément de répartition (17) associés à l'arbre (8) adaptés à plaquer la rainure (18) contre la paroi intérieure du tambour.

6. Dispositif selon la revendication précédente, caractérisé en ce que les moyens de guidage (15, 19) de l'élément de répartition (17) comportent au moins une douille de section adaptée à celle de ladite ouverture axiale.

7. Dispositif selon l'une des revendications précédentes, caractérisé en ce que l'élément de répartition (17) comporte des logements (24-26) pour les éléments de guidage (15) permettant de les découpler de l'arbre (8).

8. Dispositif selon l'une des revendications précédentes, caractérisé en ce qu'il comporte deux bras de support (9) solidaires d'un axe de pivotement (21), permettant de faire basculer le tambour de distribution (t1) entre une position de travail (W) au contact de la paroi d'application et une position de dégagement (R).

9. Dispositif selon l'une des revendications précédentes, caractérisé en ce qu'il comporte des moyens moteurs pour déplacer sans glissement le tambour de distribution (1) relativement à ladite paroi d'application (23).

10. Dispositif selon la revendication précédente, caractérisé en ce que la paroi d'application est la surface d'une table allongée (27), l'axe (21) de pivotement des deux bras de support (9) étant solidaire d'un chariot (28) déplaçable relativement à la table et les moyens moteurs comportant des éléments (20, 31, 32) d'entraînement synchronisés du tambour en rotation et du chariot en translation.

11. Dispositif selon la revendication 9, caractérisé en ce que la paroi d'application est la surface d'un cylindre (33) sur lequel repose le tambour de distribution (1) en position de travail (W), et les moyens moteurs comportent des éléments (35-38) pour la mise en rotation synchronisée en sens inverse l'un de l'autre du cylindre et du tambour.

12. Dispositif selon la revendication 9,caractérisé en ce que la paroi d'application est la surface d'un tapis transporteur sans fin (39) sur lequel repose le tambour de distribution (1) en position de travail (W), les moyens moteurs comportant des éléments (30, 44, 20) d'entraînement synchronisé du tambour de distribution (1) en rotation et du tapis transporteur (39) en translation.

13. Dispositif selon la revendications 11, caractérisé en ce que les moyens moteurs comportent un motoréducteur (30) coopérant avec une courroie (20) d'entraînement du tambour, et avec une crémaillère (31A) pour translater le chariot (28) par rapport à la table (27).

14. Dispositif selon la revendications 11, caractérisé en ce que les moyens moteurs comportent un motoréducteur (30) entraînant une courroie (35) d'entraînement du tambour de distribution (1).

15. Dispositif selon l'une des revendications précédentes, caractérisé en ce qu'il comporte des moyens de cuisson des objets plats après leur dépôt sur la paroi d'application.

16. Dispositif selon la revendication précédente, caractérisé en ce que les moyens de cuisson comportent au moins une plaque de cuisson (32) positionnée en fonction de la répartition des dépôts de substance par le tambour de distribution (1).

17. Dispositif selon la revendication précédente, caractérisé en ce qu'il comporte en outre au moins un autre élément de cuisson (46) distinct de ladite plaque de cuisson (32).

18. Dispositif selon les revendications 12 et 15, caractérisé en ce qu'ils comporte un tunnel de cuisson (45), le tapis transporteur (39) étant adapté à être traversé par les rayons infra-rouges.

19. Dispositif selon l'une des revendications précédentes, caractérisé en ce qu'il comporte des moyens de lavage (31) et des moyens de déplacement du tambour de distribution (1) entre une position de travail (W) en contact de la la paroi d'application et une position de repos (R) au voisinage des moyens de lavage (31).

20. Dispositif selon l'une des revendications précédentes, caractérisé en ce que le tambour de distribution (1) comporte un tube (2) supporté à chacune de ses extrémités par des flasques (3) pouvant tourner par rapport à l'arbre creux (8), le tube étant rendu solidaire des deux flasques par déformation de garnitures (5) venant s'appliquer contre la paroi intérieure du tube (2).

21. Dispositif selon l'une des revendications précédentes, caractérisé en ce que les moyens pour introduire de la substance à l'intérieur du tambour de distribution (1) comportent au moins un élément de thermo-régulation.

22. Dispositif selon les revendications 2 et 21, caractérisé en ce qu'il comporte un élément de thermorégulation (52 ) associé au récipient (47).

23. Dispositif selon les revendications 3 et 21 caractérisé en ce qu'il comporte des moyens (53) installés sur le circuit de pompage (47, 52) pour imposer une température de consigne à la substance issue du tambour de distribution (1).

24. Dispositif selon l'une des revendications précédentes, caractérisé en ce qu'il comporte des moyens pour déplacer angulairement la rampe par rapport à la paroi d'application (23).

## Patentansprüche

1. Vorrichtung zur Serienfertigung flacher Gegenstände, insbesondere dünner Pfannkuchen oder flacher Blätterteigkuchen besonderer Gestalt auf einer beliebigen Auflagefläche (23), ausgehend von einer Substanz ausreichend fluider Konsistenz, eine Verteilertrommel (1) umfassend, die drehbar auf einer Hohlwelle (8) gelagert ist, die so ausgebildet ist, daß sie in Kontakt mit der Auflagefläche (23) bringbar ist, wobei die Wandung dieser Verteilertrommel (1) wenigstens eine öffnung (4) aufweist, deren Form gewählt ist bezüglich der jedem flachen Gegenstand zu gebenden Gestalt, Mittel, die mit der Welle verbunden sind, um von dieser Substanz in das Innere der Trommel einzuführen, dadurch gekennzeichnet, daß sie ein planes Verteilerelement (17) umfaßt, um die Substanz zu kanalisieren und auf der Auflagefläche quer zu dieser Öffnung auszubreiten, wobei das Verteilerelement, welches mit dem Inneren der Welle (8) in Verbindung steht, radial zwischen der Welle (8) und der Innenfläche der Trommel angeordnet ist; sowie Führungsmittel (15, 14), um das Verteilerelement (17) in Kontakt hiermit zu halten.

2. Vorrichtung nach Anspruch 1, dadurch gekennzeichnet, daß die Mittel zum Einführen der Substanz einen die Substanz enthaltenden Behälter (47) umfassen, der mit dem Inneren der Welle (8) verbunden ist, welche wenigstens eine radiale Öffnung umfaßt, die das Innere der Welle mit dem Inneren der Verteilertrommel (1) in Verbindung setzt.

3. Vorrichtung nach dem vorhergehenden Anspruch, dadurch gekennzeichnet, daß sie einen Pumpkreis (47-52), der diesen Behälter (47) umfaßt, aufweist, der so ausgelegt ist, daß er die Substanz kontinuierlich längs des Verteilerelementes (17) zirkulieren läßt.

4. Vorrichtung nach einem der vorhergehenden Ansprüche, dadurch gekennzeichnet, daß das Verteilerelement (17) der Welle (8) zugeordnet ist und zwei zu beiden Seiten dieser öffnung angeordnete Platten umfaßt, die zwischen sich benachbart in ihrer Kontaktzone mit der Innenwand der Trommel eine relativ schmale Nut (18) begrenzen.

5. Vorrichtung nach dem vorhergehenden Anspruch, dadurch gekennzeichnet, daß sie Mittel (15, 19) zum Führen des Verteilerelements (17), zugeordnet zur Welle (8), aufweist, die so ausgelegt sind, daß sie die Nut (18) gegen die Innenwand der Trommel drücken.

6. Vorrichtung nach dem vorhergehenden Anspruch, dadurch gekennzeichnet, daß die Führungsmittel (15, 19) für das Verteilerelement (17) wenigstens eine Buchse eines Querschnitts aufweisen, der dem der Axialöffnung angepaßt ist.

7. Vorrichtung nach einem der vorhergehenden Ansprüche, dadurch gekennzeichnet, daß das Verteilerelement (17) Lager (24-26) für die Führungselemente (15) umfaßt, die es ermöglichen, sie von der Welle (8) abzukuppeln.

8. Vorrichtung nach einem der vorhergehenden Ansprüche, dadurch gekennzeichnet, daß sie zwei Stützarme (9), die fest mit einer Schwenkachse (21) sind, umfaßt, die es erlauben, die Verteilertrommel (1) zwischen einer Arbeitsstellung (W) in Kontakt mit der Aufliegewandung und einer Freigabestellung (R) zu verkippen.

9. Vorrichtung nach einem der vorhergehenden Ansprüche, dadurch gekennzeichnet, daß sie Antriebsmittel umfaßt, um ohne Gleiten die Verteilertrommel (1) relativ zu dieser Auflagefläche (23) zu verschieben.

10. Vorrichtung nach dem vorhergehenden Anspruch, dadurch gekennzeichnet, daß die Auflagefläche die Oberfläche eines länglichen Tisches (27) ist, wobei die Schwenkachse (21) der beiden Trägerarme (9) fest bezüglich eines Schlittens (28) ist, der relativ bezüglich des Tisches verschiebbar ist, und die Antriebsmittel Antriebselemente (20, 31, 32), die synchron mit der Trommeldrehung und dem in Translation befindlichen Schlitten sind, umfassen.

11. Vorrichtung nach Anspruch 9, dadurch gekennzeichnet, daß die Auflagefläche die Oberfläche eines Zylinders (33) ist, auf dem die Verteilertrommel (1) in Arbeitsstellung (W) ruht und die Antriebsmittel Elemente (35-38) unter synchronisiertem Indrehungversetzen von Trommel und Zylinder in umgekehrter Richtung zueinander umfassen.

12. Vorrichtung nach Anspruch 9, dadurch gekennzeichnet, daß die Auflagefläche die Oberfläche eines Endlosbandförderers (39) ist, auf dem die Verteilertrommel (1) in Arbeitsstellung (W) ruht, wobei die Antriebsmittel Elemente (30, 44, 20) zum synchronisierten Antrieb der Verteilertrommel (1) in Drehung und des Transportbandes (39) in Translation umfassen.

13. Vorrichtung nach Anspruch 11, dadurch gekennzeichnet, daß die Antriebsmittel ein Motoruntersetzergetriebe (30) umfassen, das mit einem Trommelantriebsriemen (20) zusammenwirkt, sowie einer Zahnstange (31a), um den Schlitten (28) bezüglich des Tisches (27) translatorisch zu bewegen.

14. Vorrichtung nach Anspruch 11, dadurch gekennzeichnet, daß die Antriebsmittel ein Motoruntersetzergetriebe (30) umfassen, welches einen Treibriemen (35) zum Antrieb der Verteilertrommel (1) mitnimmt.

15. Vorrichtung nach einem der vorhergehenden Ansprüche, dadurch gekennzeichnet, daß sie Back- oder Aushärtmittel für flache Gegenstände nach ihrer Ablage auf der Auflagefläche umfaßt.

16. Vorrichtung nach dem vorhergehenden Anspruch, dadurch gekennzeichnet, daß die Backmittel wenigstens eine Backplatte (32) umfassen, die als Funktion der Verteilung der Abscheidung der Substanz durch die Verteilertrommel (1) positioniert ist.

17. Vorrichtung nach dem vorhergehenden Anspruch, dadurch gekennzeichnet, daß sie im übrigen wenigstens ein anderes Backelement (46), das sich von dem der Backplatte (32) unterscheidet, umfaßt.

18. Vorrichtung nach einem der Ansprüche 12 und 15, dadurch gekennzeichnet, daß sie einen Backtunnel (45) umfaßt, wobei das Transportband (39) so ausgelegt ist, daß es von Infrarotstrahlen durchquert wird.

19. Vorrichtung nach einem der vorhergehenden Ansprüche, dadurch gekennzeichnet, daß sie Waschmittel (31) und Mittel zur Bewegung der Verteilertrommel (1) zwischen einer Arbeitsstellung (W) in Kontakt mit der Auflagewand und einer Ruhestellung (R) benachbart den Waschmitteln (31) umfaßt.

20. Vorrichtung nach einem der vorhergehenden Ansprüche, dadurch gekennzeichnet, daß die Verteilertrommel (1) ein Rohr (2) umfaßt, das an jedem seiner Enden durch Flansche (3) abgestützt ist, die bezüglich der Hohlwelle (8) sich drehen können, wobei das Rohr bezüglich der beiden Flansche durch Verformung von Garnituren (5) festgemacht ist, die sich gegen die Innenwandung des Rohres (2) legen.

21. Vorrichtung nach einem der vorhergehenden Ansprüche, dadurch gekennzeichnet, daß die Mittel zum Einführen von Substanz in das Innere der Verteilertrommel (1) wenigstens ein thermoregulierendes Element umfassen.

22. Vorrichtung nach den Ansprüchen 2 und 21, dadurch gekennzeichnet, daß sie ein thermoregulierendes Element (52) in Zuordnung zum Behälter (47) umfaßt.

23. Vorrichtung nach einem der Ansprüche 3 und 21, dadurch gekennzeichnet, daß sie Mittel (53) umfaßt, die am Pumpkreis (47, 52) installiert sind, um der aus der Verteilertrommel (1) austretenden Substanz eine Sollwerttemperatur zu verleihen.

24. Vorrichtung nach einem der vorhergehenden Ansprüche, dadurch gekennzeichnet, daß sie Mittel umfaßt, um im Winkel die Rampe bzw. Düse bezüglich der Verteilerwand (23) zu bewegen bzw. zu verschieben.

## Claims

1. Device for forming in series flat objects and notably thin cakes of particular shape on any application wall (23) from a substance of sufficiently fluid consistency, comprising a distributing drum (1) mounted rotatable on a hollow shaft (8) and adapted to be placed in contact with the application wall (23), the wall of this distributing drum (1) comprising at least one opening (4) the shape of which is chosen in keeping with the shape to be given to each flat object, and means connected to the shaft for introduction of this substance inside the drum, characterised in that it comprises a flat spreading element (17) for channelling and spreading the substance on the application surface through said opening, this spreading element communicating with the interior of the shaft (8) being disposed radially between the shaft (8) and the inner face of the drum, and guiding means (15, 19) for keeping the spreading element (17) in contact with the latter.

2. Device according to claim 1, characterised in that the means for introduction of the substance comprise a container (47) containing the substance, which is connected to the interior of the shaft (8) which comprises at least one radial orifice connecting the interior of the shaft with the interior of the distributing drum (1).

3. Device according to the preceding claim, characterised in that it comprises a pumping circuit (47-52) including said container (47), adapted to circulate the substance continuously along the spreading element (17).

4. Device according to one of the preceding claims, characterised in that the spreading element (17) is associated with the shaft (8) and comprises two plates disposed on either side of said opening, delimiting between them, in the vicinity of their zone of contact with the inner wall of the drum, a relatively narrow slot (18).

5. Device according to the preceding claim, characterised in that it comprises means (15, 19) for guiding the spreading element (17) associated with the shaft (8) and adapted to press the slot (18) against the inner wall of the drum.

6. Device according to the preceding claim, characterised in that the guiding means (15, 19) of the spreading element (17) comprise at least one bushing whose section is adapted to that of said axial opening.

7. Device according to one of the preceding claims, characterised in that the spreading element (17) comprises housings (24-26) for the guiding elements (15) making it possible to decouple them from the shaft (8).

8. Device according to one of the preceding claims, characterised in that it comprises two supporting arms (9) locked to a pivot (21) making it possible to tilt the distributing drum (1) between a working position (W) in contact with the application wall and a resting position (R).

9. Device according to one of the preceding claims, characterised in that it comprises motive means for moving the distributing drum (1) relative to said application wall (23) without slipping.

10. Device according to the preceding claim, characterised in that the application wall is the surface of an elongated table (27), the pivot (21) of the two supporting arms (9) being locked to a carriage (28) displaceable relative to the table and the motive means comprising elements (20, 31, 32) for synchronised driving of the drum in rotation and the carriage in translation.

11. Device according to claim 9, characterised in that the application wall is the surface of a cylinder (33) on which the distributing drum (1) rests in the working position (W), and the motive means comprise elements (35, 38) for synchronised rotation of the cylinder and the drum in opposite directions.

12. Device according to claim 9, characterised in that the application wall is the surface of an endless conveyor belt (39) on which the distributing drum (1) rests in the working position (W), the motive means comprising elements (30, 44, 20) for synchronised driving of the distributing drum (1) in rotation and the conveyor belt (39) in translation.

13. Device according to claim 11, characterised in that the motive means comprise a geared motor (30) cooperating with a belt (20) for driving the drum, and with a rack (31A) for translation of the carriage (28) in relation to the table (27).

14. Device according to claim 11, characterised in that the motive means comprise a geared motor (30) driving a belt (35) for driving the distributing drum (1).

15. Device according to one of the preceding claims, characterised in that it comprises means for cooking the flat objects after their deposition on the application wall.

16. Device according to the preceding claim, characterised in that the cooking means comprise at least one cooking plate (32) positioned according to the spreading of the deposits of substance by the distributing drum (1).

17. Device according to the preceding claim, characterised in that it also comprises at least one other cooking element (46) separate from said cooking plate (32).

18. Device according to claims 12 and 15, characterised in that it comprises a cooking tunnel (45), the conveyor belt (39) being adapted to be traversed by infrared radiation.

19. Device according to one of the preceding claims, characterised in that it comprises washing means (31) and means for moving the distributing drum (1) between a working position (W) in contact with the application wall and a resting position (R) in the vicinity of the washing means (31).

20. Device according to one of the preceding claims, characterised in that the distributing drum (1) comprises a tube (2) supported at each of its ends by flanges (3) capable of turning in relation to the hollow shaft (8), the tube being locked to the two flanges by deformation of seals (5) being applied against the inner wall of the tube (2).

21. Device according to one of the preceding claims, characterised in that the means for introduction of the substance inside the distributing drum (1) comprise at least one temperature control element.

22. Device according to claims 2 and 21, characterised in that it comprises a temperature control element (52) associated with the container (47).

23. Device according to claims 3 and 21, characterised in that it comprises means (53) installed in the pumping circuit (47, 52) to impose a set temperature on the substance coming from the distributing drum (1).

24. Device according to one of the preceding claims, characterised in that it comprises means for angular movement of the ramp in relation to the application wall (23).
